# EUROPEAN PATENT APPLICATION

(11) **EP 3 431 302 A1**
(43) Date of publication of application: **23.01.2019**
(21) Application number: 17766132.9
(22) Date of filing: 07.02.2017
(51) Int. Cl.: B41M 5/00, B05D 1/26, B05D 1/38, B41J 2/01, B41M 5/52, C09D 11/322

(54) **INKJET RECORDING METHOD**

(30) Priority: 18.03.2016 JP 2016056242
(71) Applicant: Konica Minolta, Inc., Tokyo 100-7015 (JP)
(72) Inventor: USHIKU Masayuki, Tokyo 100-7015 (JP)
(74) Representative: Henkel, Breuer & Partner
(86) International application number: PCT/JP2017/004407
(87) International publication number: WO 2017/159124

(57) **Abstract**

The present invention has an object of providing an inkjet recording method that provides both image blurring prevention function and high adhesive property. This object is achieved by an inkjet recording method including a precoat liquid application step of applying a precoat liquid containing, at least, resin particulate and water on a film substrate, a precoat liquid drying step of drying the precoat liquid applied on the film substrate to form a precoat layer, an ink deposition step of depositing an ink containing, at least, a color material, an organic solvent, and water on the precoat layer using an inkjet technology, and an ink drying step of drying the ink deposited on the precoat layer to record the ink, where the precoat liquid drying step and the ink drying step are performed so that the highest drying temperature T1 in the precoat liquid drying step and the highest drying temperature T2 in the ink drying step satisfy a relationship of T2 > T1.

## Description

### Technical Field

The present invention relates to an inkjet recording method, and more particularly to an inkjet recording method that provides both image blurring prevention function and high adhesive property.

### Background Art

Patent Literature 1 discloses that an ink contains a fixing resin to allow the ink to be deposited using an inkjet technology to adhere to an ink-non-absorbent recording medium, such as a film.

### Citation List

### Patent Literature

Patent Literature 1: JP 2010-248357 A

### Summary of Invention

### Technical Problem

However, an ink containing a fixing resin significantly affects ink ejection properties in an inkjet technology. In addition, drying of such ink often causes nozzle clogging, thereby requiring action such as frequent maintenance of the inkjet head.

It has been found difficult, particularly in a single-pass inkjet technology, to reduce or eliminate effects of the fixing resin on the ink ejection properties and to prevent clogging caused by the fixing resin because of prolonged continuous high-speed printing for one scan of the inkjet head.

The present inventor has considered a method including previous precoating of resin particulate on a film substrate to reduce or eliminate the amount of the fixing resin to be contained in the ink, but only to find a problem of difficulty in providing both image blurring prevention function and high adhesive property.

Thus, it is an object of the present invention to provide an inkjet recording method that provides both image blurring prevention function and high adhesive property.

Other objects of the present invention will become obvious from the description given below.

### Solution to Problem

The above problem will be solved by each of the inventions described below.
1. An inkjet recording method including:
   a precoat liquid application step of applying a precoat liquid containing, at least, resin particulate and water on a film substrate;
   a precoat liquid drying step of drying the precoat liquid applied on the film substrate to form a precoat layer;
   an ink deposition step of depositing an ink containing, at least, a color material, an organic solvent, and water on the precoat layer using an inkjet technology; and
   an ink drying step of drying the ink deposited on the precoat layer to record the ink,
   wherein a highest drying temperature T1 in the precoat liquid drying step and a highest drying temperature T2 in the ink drying step satisfy a relationship of T2 > T1.
2. The inkjet recording method according to 1, wherein a lowest melting point Tm of a film formed by drying the precoat liquid and the drying temperatures T1 and T2 satisfy a relationship of T2 ≥ Tm > T1.
3. The inkjet recording method according to 1 or 2, wherein the precoat liquid further contains a compound that causes aggregation of the color material contained in the ink.
4. The inkjet recording method according to 3, wherein the color material is an anionic dispersed pigment, and the compound that causes aggregation of the color material is an acid or a cationic compound.
5. The inkjet recording method according to any one of 1 to 4, wherein the precoat liquid contains, at least, resin particulate having a polyolefin structure as the resin particulate contained in the precoat liquid.
6. The inkjet recording method according to 5, wherein the resin particulate having a polyolefin structure is polypropylene resin particulate.

### Advantageous Effects of Invention

The present invention can provide an inkjet recording method that provides both image blurring prevention function and high adhesive property.

### Description of Embodiments

An embodiment for practicing the present invention will be described below.

An inkjet recording method of the present invention includes firstly forming a precoat layer on a film substrate, and then recording an ink on the precoat layer.

The forming of a precoat layer can be performed by a precoat liquid application step of applying a precoat liquid containing, at least, resin particulate and water on a film substrate, and a precoat liquid drying step of drying the precoat liquid applied on the film substrate to form a precoat layer.

The recording an ink on the precoat layer can be performed by an ink deposition step of depositing an ink containing, at least, a color material, an organic solvent, and water on the precoat layer using an inkjet technology, and an ink drying step of drying the ink deposited on the precoat layer to record the ink.

The inkjet recording method of the present invention is characterized in that the highest drying temperature T1 in the precoat liquid drying step and the highest drying temperature T2 in the ink drying step satisfy a relationship of T2 > T1. This feature enables image blurring prevention function and high adhesive property to be both provided.

In the description below, the method for forming a precoat layer on a film substrate will be described first in detail, and the method for recording an ink on the precoat layer will then be described in detail.

The resin for forming the film substrate is not particularly limited, and preferred examples thereof include plastic materials, such as polyolefins such as polypropylene and polyethylene; polyesters such as polyethylene terephthalate; and polyamides such as nylon. The film substrate may be either an unstretched film or a stretched film. A film that does not absorb ink, or only slightly absorb ink, may be suitably used as the film substrate. The film substrate may have its surface treated by surface treatment such as corona treatment. A transparent film substrate may be preferably used.

In the precoat liquid application step, a precoat liquid containing, at least, resin particulate and water is applied on the film substrate.

The resin forming the resin particulate in the precoat liquid is not particularly limited. Examples thereof include a resin having a polyurethane structure (hereinafter also referred to as "polyurethane resin" or simply as "urethane resin"), a resin having a polyolefin structure, and an acrylic resin. Among others, use of a resin having a polyurethane structure can further improve ink adhesion property on an image to be printed at a later stage using an inkjet technology, and can also improve flexibility of the film substrate after printing.

The resin particulate formed of a resin having a polyurethane structure may preferably be, for example, cationic or nonionic polyurethane resin particulate.

Specific examples of the cationic or nonionic polyurethane resin particulate will be described below. Examples of the cationic polyurethane resin particulate include "Superflex 620" and "Superflex 650" produced by DKS Co. Ltd. ("Superflex" is a registered trademark of this company), "Permarin UC-20" produced by Sanyo Chemical Industries, Ltd. ("Permarin" is a registered trademark of this company), and "Parasurf UP-22" produced by Ohara Paragium Chemical Co., Ltd. Examples of the nonionic polyurethane resin particulate include "Superflex 500M" and "Superflex E-2000" produced by DKS Co. Ltd.

The resin particulate may also preferably be a resin having a polyolefin structure. In particular, preference is given to combinational use of resin particulate formed of a resin having a polyurethane structure and resin particulate formed of a resin having a polyolefin structure.

The resin particulate formed of a resin having a polyolefin structure may preferably be, for example, polypropylene resin particulate. Use of resin particulate formed of a resin having a polyolefin structure (in particular, polypropylene resin particulate) can further improve ink adhesion property on a printed image to a hydrophobic recorded medium, such as one made of polyethylene or polypropylene.

The resin having a polyolefin structure may contain chlorine or a polar group, such as a carboxyl group.

The resin particulate formed of a resin having a polyolefin structure may be a commercially available product, such as "Superchlon E-415" (polypropylene resin particulate) produced by Nippon Paper Industries Co., Ltd., or "Auroren AE-301" (polyolefin resin particulate) produced by Nippon Paper Industries Co., Ltd.

The resin particulate preferably has a volume average particle size in a range from 10 nm to 10 µm. A volume average particle size can be determined using a commercially available particle size measurement device that uses a method such as dynamic light scattering or electrophoresis. Among these, measurement using dynamic light scattering is more simple and convenient, and provides an accurate measurement in the particle size range described above.

The resin particulate may be used alone or in combination of two or more.

The precoat liquid contains the resin particulate preferably in an amount in a range from 5 percent by weight (wt%) to 40 wt%, and more preferably in a range from 10 wt% to 30 wt%, relative to the weight of the precoat liquid.

The precoat liquid preferably further contains a compound for causing aggregation of the color material contained in the ink to be deposited at a later stage using an inkjet technology (the compound hereinafter also referred to as "color material aggregating agent"). This significantly improves the effect of blurring prevention.

As an example, if the color material contained in the ink is an anionic dispersed pigment, the color material aggregating agent may preferably be, for example, an acid or a cationic compound.

An acid enables the anionic dispersed pigment in the ink to aggregate through a pH change. Preferred examples of the acid include formic acid, acetic acid, propionic acid, isobutyric acid, oxalic acid, fumaric acid, malic acid, citric acid, malonic acid, succinic acid, maleic acid, benzoic acid, 2-pyrrolidone-5-carboxylic acid, lactic acid, acrylic acid and derivatives thereof, methacrylic acid and derivatives thereof, acrylamides and derivatives thereof, sulfonic acid derivatives, and phosphoric acid and derivatives thereof. The acid is preferably an organic acid rather than an inorganic acid. Use of an organic acid improves compatibility with another component such as the resin contained in the applied liquid, and also has an effect to provide high transparency because the coat layer formed by the applied liquid is unlikely to generate a salt after being dried.

A cationic compound enables the anionic dispersed pigment in the ink to aggregate through salting-out. Examples of the cationic compound include polyvalent metal salts and cationic surfactants. Preferred examples of the polyvalent metal salt include water-soluble salts such as calcium salts, magnesium salts, aluminum salts, and zinc salts. Preferred examples of the cationic surfactant include aliphatic amine salts, aliphatic quaternary ammonium salts, benzalkonium salts, benzethonium chloride, pyridinium salts, and imidazolinium salts.

The color material aggregating agent may be used alone or in combination of two or more.

The precoat liquid may contain, as a solvent, an organic solvent instead of water. The solvent can be removed in the precoat liquid drying step at a later stage.

The precoat liquid may also contain a surfactant. This will improve suitability to various application methods.

The precoat liquid may additionally contain a cross-linking agent, a mildewcide, a sterilizing agent, and/or the like, as appropriate, to such an extent that the advantages of the present invention will not be reduced.

The method for applying the precoat liquid on the film substrate is not particularly limited, and preferred examples thereof include roller application, curtain application, spray application, inkjet technology, and the like.

Next, in the precoat liquid drying step, the precoat liquid applied on the film substrate is dried to form the precoat layer.

In the precoat liquid drying step, the precoat layer is maintained in a partially processed state (i.e., a state of incomplete film formation), leaving a further film formation process to be performed at a later stage. As used herein, the phrase "state of incomplete film formation" refers to a state in which the resin is not melt by heating to allow the resin to remain in particulate shapes, or otherwise, a state before the resin is completely admixed even if the resin particulate has been melt. The precoat layer in a state of incomplete film formation is in a sparse configuration including a relatively high amount of gaps (boundaries) between resin polymer structures.

The precoat layer in a state of incomplete film formation may be suitably formed by drying the precoat layer under a lower temperature condition or under a shorter duration condition than the condition used for melting the resin particulate to cause the resin to be completely admixed.

A state of incomplete film formation can be confirmed by observation using, for example, a polarizing microscope.

The precoat liquid may be dried using, for example, a non-contact heating dryer such as a drying furnace or a heated-air blower, or a contact heating dryer such as a hot plate or a heating roller.

The drying temperature in the precoat liquid drying step can be determined by measuring, for example, one selected from (a) atmospheric temperature such as an in-furnace temperature or a heated-air temperature if a non-contact heating dryer such as a drying furnace or a heated-air blower is used; (b) temperature of contact heating area if a contact heating dryer such as a hot plate or a heating roller is used; and (c) surface temperature of the dried surface, each for the entire period of the precoat liquid drying step. The temperature measurement is more preferably made on (c) surface temperature of the dried surface. As used herein, the highest drying temperature T1 denotes the highest temperature of the temperatures measured in the measurement operation during the entire period of the precoat liquid drying step.

The thickness of the dried precoat layer is not particularly limited, but is, for example, preferably in a range from 0.1 µm to 4 µm, and more preferably in a range from 0.5 µm to 2 µm. A thickness in these ranges enables a change in texture of the film substrate to be suitably prevented. In addition, the precoat layer may contain a sufficient amount of color material aggregating agent if a color material aggregating agent is used.

The film substrate having the precoat layer formed thereon may also be hereinafter referred to "recording medium."

Next, in the ink deposition step, the ink containing, at least, the color material, the organic solvent, and water is deposited on the precoat layer using an inkjet technology. The ink to be deposited on the precoat layer in the ink deposition step will be described later herein.

Next, in the ink drying step, the ink that has been deposited on the precoat layer is dried and recorded.

The ink may be dried using, for example, a non-contact heating dryer such as a drying furnace or a heated-air blower, or a contact heating dryer such as a hot plate or a heating roller.

The drying temperature in the ink drying step can be determined similarly to the case of the drying temperature in the precoat liquid drying step described above. Unless a special situation exists, a value is used that is measured under the same conditions as the conditions used for the drying temperature measurement in the precoat liquid drying step. As used herein, the highest drying temperature T2 denotes the highest temperature of the temperatures measured in the measurement operation during the entire period of the ink drying step.

Use of the highest drying temperature T1 in the precoat liquid drying step and the highest drying temperature T2 in the ink drying step that satisfy a relationship of T2 > T1 enables image blurring prevention function and high adhesive property to be both provided.

If the above relationship T2 > T1 is satisfied, deposited inks are prevented from blurring with respect to each other presumably because the inks deposited using an inkjet technology more readily penetrate into the precoat layer having a sparse configuration after the precoat liquid drying step performed at a relatively low temperature. In particular, even in single-pass printing that provides high speed ink deposition, blurring can be prevented by rapid ink penetration into the precoat layer.

If the precoat layer contains a color material aggregating agent, the color material aggregating agent diffuses rapidly into the ink, thereby enabling blurring to be prevented to a higher degree. Use of a color material aggregating agent enables blurring to be prevented in single-pass printing more reliably.

In contrast, the ink drying step is performed at a relatively high temperature, thereby promoting the movement of resin particles of the resin particulate in the precoat layer to cause the resin particles to move to near the color material. This presumably improves the ink adhesion property on the image.

In particular, in a case in which resin particulate having a polyolefin structure is used as the resin particulate, low polarity results in low solubility in an aqueous ink, and thus no sufficient movement of resin particles can be expected by dissolution. However, heating the ink at a relatively high temperature presumably promotes movement, thereby improving the ink adhesion property on the image.

This improves the adhesion property even for a film substrate that is typically unlikely to exhibit a good adhesion property, such as an oriented polyolefin film such as a biaxially oriented polypropylene film (abbreviated as OPP film) among others.

The magnitude of temperature difference between T1 and T2 is not particularly limited as long as the relationship of T2 > T1 is satisfied.

To further suitably provide both image blurring prevention function and high adhesive property, the lowest melting point Tm of the film formed by drying the precoat liquid (this melting point hereinafter also referred to as "melting point of the precoat layer") and the drying temperatures T1 and T2 preferably satisfy a relationship of T2 ≥ Tm > T1.

As used herein, the lowest melting point Tm of the film formed by drying the precoat liquid refers to the temperature identified if determination of the melting point of the film formed by drying the precoat liquid has identified a single melting point, and to the temperature of the lowest melting point of the multiple melting points if multiple melting points have been identified.

If the above relationship of T2 ≥ Tm > T1 is satisfied, the precoat layer formation process is reliably only partially performed to maintain the precoat layer in a sparse configuration in the precoat liquid drying step, while movement of the resin particles is further promoted in the ink drying step. This enables both image blurring prevention function and high adhesive property to be further suitably provided. It is preferred that at least one of the relation of T2 ≥ Tm and the relation of Tm > T1 be satisfied, but indeed, satisfaction of both relationships (i.e., satisfaction of the relationship of T2 ≥ Tm > T1) significantly improves the effects of providing both image blurring prevention function and high adhesive property.

Even when the highest drying temperature T1 in the precoat liquid drying step reaches the melting point Tm, satisfaction of the relationship of T2 > T1 has effects of providing both image blurring prevention function and high adhesive property.

The ink to be deposited on the precoat layer in the ink deposition step will next be described in detail. As described above, the ink used may contain, at least, a color material, an organic solvent, and water.

The color material may be, for example, a dye, a pigment, or a mixture thereof.

Examples of the dye include water-soluble dyes and disperse dyes. Examples of the water-soluble dyes include acid dyes, direct dyes, and basic dyes. Examples of the disperse dyes include colored polymers and colored waxes.

The pigment used may be any conventionally known pigment, and may be any of water-dispersible pigments, solvent-dispersible pigments, and the like. For example, organic pigments such as insoluble pigments and lake pigments, and inorganic pigments such as titanium oxide and carbon black may be preferably used. These pigments may be used, for example, after being dispersed in the ink by using a pigment dispersant.

The insoluble pigment used is not particularly limited. Preferred examples thereof include azo compounds, azomethines, methine compounds, diphenyl methane, triphenyl methane, quinacridone, anthraquinone, perylene, indigo, quinophthalone, isoindolinone, isoindoline, azines, oxazines, thiazine, dioxazine, thiazole, phthalocyanine, and diketo-pyrrolo-pyrrole.

The organic pigment is not particularly limited. Preferred examples thereof include the compounds given below.

Examples of pigment used for a yellow, orange, or other similar color include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 74, C.I. Pigment Yellow 93, C.I. Pigment Yellow 128, C.I. Pigment Yellow 94, C.I. Pigment Yellow 138, and C.I. Pigment Yellow 155.

Examples of pigment used for a magenta, red, or other similar color include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 202, C.I. Pigment Red 222, and C.I. Pigment Violet 19.

Examples of pigment used for a cyan, green, or other similar color include C.I. Pigment Blue 15, C.I. Pigment Blue 15:2, C.I. Pigment Blue 15:3, C.I. Pigment Blue 16, C.I. Pigment Blue 60, and C.I. Pigment Green 7.

Examples of pigment used for black or other similar color include C.I. Pigment Black 1, C.I. Pigment Black 6, and C.I. Pigment Black 7.

The pigment dispersed in the ink has an average particle size preferably in a range from 50 nm to 200 nm. This average particle size enables dispersion stability of the pigment to be improved, and storage stability of the ink to be improved. The particle size of pigment can be determined using a commercially available particle size measurement device that uses a method such as dynamic light scattering or electrophoresis. Among these, measurement using dynamic light scattering is more simple and convenient, and provides an accurate measurement in the particle size range described above.

The pigment may be used after being dispersed by a disperser, together with a pigment dispersant and with other additives as required for intended purposes.

The disperser may be a conventionally known ball mill, sand mill, line mill, high pressure homogenizer, or the like. Among these, dispersion of pigment using a sand mill results in narrow particle size distribution, and thus a sand mill is preferred. The material of beads for use in sand mill dispersion is not particularly limited. However, in view of preventing bead debris generation and contamination of an ionic component, zirconia or zircon is preferred. In addition, these beads preferably have a diameter in a range from 0.3 mm to 3 mm.

The pigment content in the ink is not particularly limited, but is preferably in a range from 7 wt% to 18 wt% for an inorganic pigment, and in a range from 0.5 wt% to 7 wt% for an organic pigment.

The pigment is particularly preferably an anionic dispersed pigment. Examples of anionic dispersed pigment include a pigment having an anionic group introduced on its surface, and a pigment dispersed using a pigment dispersing material having an anionic group.

Preferred examples of the anionic group include carboxyl group and sulfonate group.

The anionic group is preferably neutralized by alkali. Preferred examples of the alkali for neutralizing the anionic group include metallic base compounds such as sodium hydroxide, potassium hydroxide, lithium hydroxide, and calcium hydroxide; ammonia; organic amines such as triethylamine, pyridine, and morpholine; and alkanolamines such as monoethanolamine.

The pigment dispersant may preferably be a macromolecular dispersant (also referred to as "resin dispersant") having an acid value. The acid value is not particularly limited, but is preferably in a range from 50 mgKOH/g to 250 mgKOH/g.

The pigment dispersant used may preferably be, for example, an acryl-based dispersant. The acryl-based dispersant that can be suitably used is one or more selected from poly(meth)acrylic acid and (meth)acrylate copolymers.

The acryl-based dispersant contains (meth)acrylic acid as the monomeric component. The acryl-based dispersant used may preferably be a polymer of (meth)acrylic acid (i.e., poly(meth)acrylic acid), or a copolymer produced by copolymerization, as needed, with another monomeric component such as styrene (i.e., (meth)acrylate copolymer).

The acryl-based dispersant may be a commercially available product such as "Joncryl 819" (acid value: 75 mgKOH/g) or "Joncryl 67" (acid value: 213 mgKOH/g) each produced by BASF Corporation.

The pigment dispersant may be used alone or in combination of two or more.

The organic solvent to be contained in the ink may preferably be, for example, a water-soluble organic solvent.

Preferred examples of the water-soluble organic solvent include monovalent alcohols, glycols (bivalent alcohols), trivalent alcohols, glycol ethers, acetates, amines, and amides.

Preferred examples of the monovalent alcohols include methanol, ethanol, propanol, isopropanol, butanol, isobutanol, secondary butanol, and tertiary butanol.

Preferred examples of the glycols include ethylene glycol, diethylene glycol, triethylene glycol, tetraethylene glycol, polyethylene glycols having 5 or more ethylene oxide groups, propylene glycol, dipropylene glycol, tripropylene glycol, tetrapropylene glycol, polypropylene glycols having 4 or more propylene oxide groups, butylene glycol, thiodiglycol, 1,2-butanediol, 1,3-butanediol, 1,4-butanediol, 1,2-pentanediol, 1,2-hexanediol, 1,2-heptanediol, and 3-methyl-2,4-pentanediol.

Preferred examples of the trivalent alcohols include glycerol and hexanetriol.

Preferred examples of the glycol ethers include ethylene glycol monoethyl ether, ethylene glycol monobutyl ether, diethylene glycol monomethyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, propylene glycol monopropyl ether, propylene glycol monobutyl ether, dipropylene glycol monomethyl ether, dipropylene glycol monoethyl ether, dipropylene glycol monopropyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, and tripropylene glycol dibutyl ether.

Preferred examples of the acetates include ethylene glycol monomethyl ether acetate, ethylene glycol monoethyl ether acetate, ethylene glycol diacetate, diethylene glycol monoethyl ether acetate, propylene glycol monomethyl ether acetate, and propylene glycol diacetate.

Preferred examples of the amines include ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine.

Preferred examples of the amides include 2-pyrrolidinone, dimethylimidazolidinone, formamide, N,N-dimethylformamide, and N,N-dimethylacetamide.

These solvents may be used alone or in combination of two or more. In particular, in a case in which the resin contained in the precoat layer is a polyolefin resin, the solvent contained in the ink at the highest content is preferably a glycol. This composition prevents the resin in the precoat layer from swelling and dissolving more than necessary, thereby enabling good adhesion property to be provided. As used herein, the solvent contained in the ink at the highest content refers to the solvent having a highest compounding ratio (by weight) in the ink if the ink contains multiple inks, or the solvent itself if the ink contains only a single solvent.

To improve dispensing properties and/or wettability, the ink preferably contains a surfactant. The surfactant is not particularly limited, and examples thereof include cationic surfactants, anionic surfactants, ampholytic surfactants, and nonionic surfactants.

Preferred examples of the cationic surfactant include aliphatic amine salts, aliphatic quaternary ammonium salts, benzalkonium salts, benzethonium chloride, pyridinium salts, and imidazolinium salts.

Preferred examples of the anionic surfactant include fatty acid soap, N-acyl-N-methylglycine salts, N-acyl-N-methyl-β-alanine salts, N-acylglutamates, acylated peptides, alkyl sulfonates, alkylbenzene sulfonates, alkylnaphthalene sulfonates, dialkyl sulfosuccinates, alkyl sulfoacetates, α-olefin sulfonates, N-acyl methyl taurine, sulfated oil, higher alcohol sulfates, secondary higher alcohol sulfates, alkyl ether sulfates, secondary higher alcohol ethoxy sulfates, polyoxyethylene alkylphenyl ether sulfates, monoglysulfates, fatty acid alkylolamide sulfates, alkyl ether phosphates, and alkyl phosphates.

Preferred examples of the ampholytic surfactant include carboxybetaines, sulfobetaines, aminocarboxylates, and imidazolinium betaines.

Preferred examples of the nonionic surfactant include polyoxyethylene secondary alcohol ethers, polyoxyethylene alkylphenyl ethers, polyoxyethylene sterol ethers, polyoxyethylene lanolin derivatives, polyoxyethylene polyoxypropylene alkyl ethers, polyoxyethylene glycerol fatty acid esters, polyoxyethylene castor oil, hydrogenated castor oil, polyoxyethylene sorbitol fatty acid esters, polyethylene glycol fatty acid esters, fatty acid monoglycerides, polyglycerol fatty acid esters, sorbitan fatty acid esters, propylene glycol fatty acid esters, sucrose fatty acid esters, fatty acid alkanolamides, polyoxyethylene fatty acid amides, polyoxyethylene alkylamines, alkylamine oxides, acetylene glycols, and acetylene alcohols.

To reduce surface tension, a portion of each of these surfactants is preferably substituted with a fluorine atom or a silicon atom.

These surfactants may be used alone or in combination of two or more. The content of the surfactant in the ink is not particularly limited, but is preferably in a range from 0.1 wt% to 5.0 wt%.

The ink may contain other component as appropriate to such an extent that the advantages of the present invention will not be reduced.

The ink preferably contains no resin particulate described in relation to the precoat liquid. Otherwise, if the ink contains such resin particulate, the content thereof is preferably 5 wt% or less, more preferably 3 wt% or less, and most preferably 2 wt% or less, relative to the weight of the ink. This range of content stabilizes ink ejection properties in the inkjet technology, and also effectively prevents nozzle clogging.

The inkjet technology for use in depositing the ink described above onto the recording medium is not particularly limited, and a printer including an inkjet head charged with ink may be used. Specifically, ink can be discharged dropwise from a nozzle of an inkjet head based on a digital signal to allow the ink droplet to deposit on the precoat layer of the recording medium, thus to perform printing.

The inkjet head may be either of an on-demand or continuous type. The droplet ejection method of the inkjet head may be any one of an electromechanical conversion method (e.g., single cavity type, double cavity type, bender type, piston type, share mode type, and shared wall type) and an electrothermal conversion method (e.g., thermal inkjet type and BubbleJet® type).

Among these, an inkjet head is suitable that uses a piezoelectric element (also referred to as "piezo inkjet head") as an electromechanical transducer for use in the electromechanical conversion method.

In view of availability of many of typical films in a roll form, a single-pass inkjet recording method is preferably used. The present invention provides its advantages particularly effectively in a single-pass inkjet recording method. That is, a single-pass inkjet recording method is usually likely to cause cracking as described above, but the present invention provides high resolution image generation even under such condition.

A single-pass inkjet recording method deposits ink droplets onto all the pixels where a dot is to be printed in a single passage when the recording medium passes under an inkjet head unit.

A single-pass inkjet recording method is preferably provided by using an inkjet head having a line head arrangement.

As used herein, the term "inkjet head having a line head arrangement" refers to an inkjet head having a length greater than the width of the print range. The inkjet head having a line head arrangement may be a single inkjet head having a length greater than the width of the print range, or a set of multiple heads together configured to have a total length greater than the width of the print range.

It is also preferred that a set of multiple heads be arranged in parallel to each other to have their nozzles in a staggered arrangement to increase the resolution of the entire set of the multiple heads.

The inkjet recording method of the present invention can be suitably used in various applications in which printing is performed on a recording medium including a film substrate using an inkjet technology. The usage of the recording medium on which printing has been performed using the inkjet recording method of the present invention is not particularly limited. Specific examples of usage of a printed recording medium preferably include packaging films for packaging food, a beverage container, and the like.

### Example

An example of the present invention will be described below. Note that the present invention is not limited to this example.

### (Test 1)

### 1. Formation of precoat layer

### (1) Preparation of precoat liquid

A quantity of 20.0 parts by weight of emulsion (solid content concentration: 24.8 wt%, "Superchlon E-415" produced by Nippon Paper Industries Co., Ltd.) containing polypropylene resin particulate (hereinafter also referred to as "PO-1"), 38.9 parts by weight of emulsion (solid content concentration: 30.0 wt%, "Superflex 620" produced by DKS Co. Ltd.) containing cationic resin particulate having a polyurethane structure (hereinafter also referred to as "UR-1"), 11.1 parts by weight of 30 wt% aqueous malonic acid solution as a color material aggregating agent, and ion-exchanged water (the balance: amount to make 100 parts by weight) were sequentially added together with stirring. Thereafter, the resulting mixture was filtered using a 5.0 µm filter to obtain the precoat liquid. Note that there was no substantial compositional change before and after the filtration.

### (2) Precoat liquid application step

The precoat liquid was applied on a PET film serving as the film substrate using a wire bar under a condition of wet film thickness of 9 µm.

### (3) Precoat liquid drying step

The precoat liquid applied on the film substrate was sufficiently dried using heated-air at 65°C to form the precoat layer to serve as the recording medium, where the drying temperature T1 was 65°C. In parallel with this, the precoat liquid was dried to form the precoat layer, and the melting point was then measured. The measurement result showed the melting point at 80°C and at 142°C, meaning that the lowest melting point Tm of the precoat layer in this example was 80°C.

### 2. Ink recording

### (1) Ink preparation

A mixture was prepared by premixing together 4.5 wt% of styrene acrylic copolymer (product of BASF Corporation; Joncryl 678, molecular weight: 8500, acid value: 215) as a macromolecular dispersant, 1.25 wt% of 25% aqueous ammonia solution, 15 wt% of pigment ("GNKA-SD" produced by DIC Corporation; Pigment Blue 15:3), and ion-exchanged water as the balance. After this, the mixture was subjected to dispersion treatment using a sand grinder filled with 0.5 mm zirconia beads at a volume ratio of 50% to obtain a cyan pigment dispersion (also referred to simply as "pigment dispersion") containing the pigment with a content of 15 wt%. The pigment particles contained in this pigment dispersion had an average particle size of 122 nm.

Then, 29.8 parts by weight of the pigment dispersion obtained, 15.0 parts by weight of ethylene glycol, 10.0 parts by weight of propylene glycol, 0.3 parts by weight of silicon-based surfactant (KF-351A produced by Shin-Etsu Chemical). The contents were adjusted by ion-exchanged water (the balance) to make 100 parts by weight in total. These components were mixed together with stirring. After sufficient stirring, the resulting mixture was filtered using a 5.0 µm filter to obtain the ink. Note that there was no substantial compositional change before and after the filtration.

### (2) Ink deposition step

In this test, the ink deposition step was performed using both multi-pass printing and single-pass printing.

### <Multi-pass printing (4-pass printing)>

The recording medium was passed four times to perform printing at a page coverage of 200%, that is, in an ink deposition volume for two colors (22.5 cc/m²) using an independently-driven inkjet head (360 dpi, droplet size: 14 pL) manufactured by Konica Minolta, Inc.

An image was printed in which 6-point outline letters were arranged in a 7 cm × 7 cm solid square in an ink deposition volume of 22.5 cc/m².

### <Single-pass printing (1-pass printing)>

Two independently-driven inkjet heads (360 dpi, droplet size: 14pL) manufactured by Konica Minolta, Inc. were arranged in parallel to each other so that their nozzles are arranged in a staggered arrangement to form a head module capable of printing an image of 720 dpi × 720 dpi in single-pass printing.

Two of such head modules were prepared, and arranged in parallel to each other along the feed direction of the feed stage that feeds the recording medium. Each of the head modules was disposed in a direction to cross the feed direction (feed stage movement axis). Thus, the setup was configured to perform printing at a page coverage of 200%, that is, in an ink deposition volume for two colors (22.5 cc/m²) by each passage of the recording medium. The ink used was Ink 1.

The recording medium was attached on the feed stage, and was fed at a speed of 60 m/min to print an image in single-pass printing each time the recording medium passes under the heads.

An image was printed in which 6-point outline letters were arranged in a 7 cm × 7 cm solid square in an ink deposition volume of 22.5 cc/m².

### (3) Ink drying step

For each of the multi-pass printing and the single-pass printing described above, the recording medium was placed on a hot plate after printing using an inkjet technology to dry the recording medium at 80°C for 15 minutes, meaning that the drying temperature T2 was 80°C.

A similar test to the test described above was also performed on a recording medium including, in place of the PET film, a biaxially oriented polypropylene film (abbreviated as OPP film) ("Taiko polypropylene film FO#50-FOS" produced by Furamura Chemical Co., Ltd.), as the film substrate.

### (Test 2)

Images were formed similarly to Test 1 as in Test 1 except that the drying temperature T2 was 90°C.

### (Test 3)

Images were formed similarly to Test 1 as in Test 1 except that the drying temperature T1 was 55°C and the drying temperature T2 was 70°C.

### (Test 4)

Images were formed similarly to Test 1 as in Test 1 except that the drying temperature T1 was 80°C and the drying temperature T2 was 80°C.

### (Test 5)

Images were formed similarly to Test 1 as in Test 1 except that the drying temperature T1 was 65°C and the drying temperature T2 was 65°C.

### (Test 6)

Images were formed similarly to Test 1 as in Test 1 except that 20.2 parts by weight of emulsion (solid content concentration: 25.0 wt%, "Auroren AE-301" produced by Nippon Paper Industries Co., Ltd.) containing polyolefin resin particulate (hereinafter also referred to as "PO-2") was used in place of the emulsion containing the polypropylene resin particulate (PO-1) in the precoat liquid, and that the drying temperature T1 was 60°C and the drying temperature T2 was 70°C. In parallel with this, the precoat liquid was dried to form the precoat layer, and the melting point was then measured. The measurement result showed the melting point at 65°C and at 142°C, meaning that the lowest melting point Tm of the precoat layer in this example was 65°C.

### (Test 7)

Images were formed similarly to Test 1 as in Test 1 except that 3.4 parts by weight of cationic surfactant ("Quartamin 24P" produced by Kao Corporation) was used in place of the 30 wt% aqueous malonic acid solution, as the color material aggregating agent in the precoat liquid.

### (Test 8)

Images were formed similarly to Test 1 as in Test 1 except that the 30 wt% aqueous malonic acid solution was not used as the color material aggregating agent in the precoat liquid.

### (Test 9)

Images were formed similarly to Test 1 as in Test 1 except that the 30 wt% aqueous malonic acid solution was not used as the color material aggregating agent in the precoat liquid, and that the drying temperature T1 was 80°C and the drying temperature T2 was 80°C.

### (Test 10)

Images were formed similarly to Test 1 as in Test 1 except that 37.0 wt% of emulsion (solid content concentration: 45 wt%, "Superflex 500M" produced by DKS Co. Ltd.) containing nonionic resin particulate having a polyurethane structure (hereinafter also referred to as "UR-2") was used alone in place of the combination of the emulsion containing polypropylene resin particulate (PO-1) and the emulsion containing cationic resin particulate having a polyurethane structure (UR-1) in the precoat liquid, and that the lowest melting point Tm of the precoat layer was 67°C, the drying temperature T1 was 55°C, and the drying temperature T2 was 80°C.

### (Test 11)

Images were formed similarly to Test 6 as in Test 6 except that the drying temperature T1 was 65°C and the drying temperature T2 was 80°C.

### <Evaluation method>

### (1) Blurring prevention performance

Each of the images recorded in above Tests was observed to evaluate the blurring prevention performance based on the evaluation criteria given below.

### [Evaluation criteria]

A: No blur was observed, and no part of lines of the outline letters was faded out.
B: No blur was observed, but one or more hooks (thin lines) of the outline letters were faded out.
C: Blur was observed, and one or more main stretches (thick lines) of the outline letters were faded out.

### (2) Adhesion property

A strip of cellophane tape was pressed to adhere to an image portion recorded in each of above Tests, followed by quickly removing the tape in one action with the end of the strip held at an angle of 45°. The resulting condition was observed to evaluate the adhesion property based on the evaluation criteria given below. [Evaluation criteria]
A: No portion of the solid image was peeled off, and no change was observed as compared to the condition before the test.
B: A slight color migration was observed on the tape, but the solid image appeared to remain uniform.
C: A portion of the solid image was peeled off, and the solid image appeared patchy.

The evaluation results described above are illustrated in Table 1.

**[Table 1]**

| | Precoat layer | | | Drying temperature | | Evaluation | | | | | | Remarks |
|---|---|---|---|---|---|---|---|---|---|---|---|---|
| | | | | | | With use of PET film | | | With use of OPP film | | | |
| | Resin | Tm | Color material aggregating agent | T1 | T2 | Blurring prevention performance | | Adhesion property | Blurring prevention performance | | Adhesion property | |
| | | | | | | 4-pass printing | 1-pass printing | | 4-pass printing | 1-pass printing | | |
| Test 1 | PO-1 | 80°C | Malonic acid | 65°C | 80°C | A | A | A | A | A | A | Inventive |
| | UR-1 | | | | | | | | | | | |
| Test 2 | PO-1 | 80°C | Malonic acid | 65°C | 90°C | A | A | A | A | A | A | Inventive |
| | UR-1 | | | | | | | | | | | |
| Test 3 | PO-1 | 80°C | Malonic acid | 55°C | 70°C | A | A | A | A | A | B | Inventive |
| | UR-1 | | | | | | | | | | | |
| Test 4 | PO-1 | 80°C | Malonic acid | 80°C | 80°C | C | C | A | C | C | A | Comparative |
| | UR-1 | | | | | | | | | | | |
| Test 5 | PO-1 | 80°C | Malonic acid | 65°C | 65°C | A | A | B | A | A | C | Comparative |
| | UR-1 | | | | | | | | | | | |
| Test 6 | PO-1 | 65°C | Malonic acid | 60°C | 70°C | A | B | A | A | B | A | Inventive |
| | UR-1 | | | | | | | | | | | |
| Test 7 | PO-1 | 80°C | Cationic surfactant | 65°C | 80°C | A | B | A | A | B | A | Inventive |
| | UR-1 | | | | | | | | | | | |
| Test 8 | PO-1 | 80°C | None | 65°C | 80°C | A | C | A | A | C | A | Inventive |
| | UR-1 | | | | | | | | | | | |
| Test 9 | PO-1 | 80°C | None | 80°C | 80°C | C | C | A | C | C | A | Comparative |
| | UR-1 | | | | | | | | | | | |
| Test 10 | UR-2 | 67°C | Malonic acid | 55°C | 80°C | A | A | A | A | A | B | Inventive |
| Test 11 | PO-2 | 65°C | Malonic acid | 65°C | 80°C | B | B | A | B | B | A | Inventive |
| | UR-1 | | | | | | | | | | | |

### <Evaluation>

Table 1 indicates that satisfaction of the relationship of T2 > T1 by the drying temperatures T1 and T2 (Test 8) results in higher blurring prevention performance and higher adhesion property than those obtained when the drying temperatures T1 and T2 do not satisfy the relationship of T2 > T1 (Test 9; comparative).

It can further be seen that if the relationship of T2 > T1 is satisfied, and the precoat liquid contains a color material aggregating agent (Tests 1, 2, 3, 6, and 7), the blurring prevention performance is further improved, and in particular, good blurring prevention performance can be obtained also in single-pass printing ("1-pass printing" column in Table 1).

In addition, a comparison, for example, between the results of Test 1 and Test 3 indicates that satisfaction of a relationship of T2 ≥ Tm > T1 by the lowest melting point Tm of the precoat layer and the drying temperatures T1 and T2 further improves the adhesion property.

Moreover, a comparison, for example, between the results of Test 1 and Test 10 indicates that use of urethane resin particulate in combination with polyolefin resin particulate, preferably with polypropylene resin material, further improves the adhesion property as compared to when urethane resin particulate is used alone as the resin particulate in the precoat liquid.

Moreover, a comparison between the results of Test 6 and Test 11 indicates that satisfaction of the relationship of T2 > T1 provides the advantages of the present invention even if the highest drying temperature T1 in the precoat liquid drying step reaches the melting point Tm (Test 11). In addition, it can also be seen that if a relationship of Tm > T1 is further satisfied (Test 6), the advantages of the present invention (particularly the blurring prevention performance) are further improved. This result indicates that satisfaction of the relationship of Tm > T1 is effective in more reliably maintaining the precoat layer in a sparse configuration after the precoat liquid drying step.

The results of Test 11 indicate that, in addition to the relationship of T1 = Tm similarly to Tests 4 and 9, satisfaction of the relationship of T2 > T1 further improves blurring prevention performance as compared to those of Tests 4 and 9.

## Claims

1. An inkjet recording method comprising:
a precoat liquid application step of applying a precoat liquid containing, at least, resin particulate and water on a film substrate;
a precoat liquid drying step of drying the precoat liquid applied on the film substrate to form a precoat layer;
an ink deposition step of depositing an ink containing, at least, a color material, an organic solvent, and water on the precoat layer using an inkjet technology; and
an ink drying step of drying the ink deposited on the precoat layer to record the ink,
wherein a highest drying temperature T1 in the precoat liquid drying step and a highest drying temperature T2 in the ink drying step satisfy a relationship of T2 > T1.

2. The inkjet recording method according to claim 1, wherein a lowest melting point Tm of a film formed by drying the precoat liquid and the drying temperatures T1 and T2 satisfy a relationship of T2 ≥ Tm > T1.

3. The inkjet recording method according to claim 1 or 2, wherein the precoat liquid further contains a compound that causes aggregation of the color material contained in the ink.

4. The inkjet recording method according to claim 3, wherein the color material is an anionic dispersed pigment, and the compound that causes aggregation of the color material is an acid or a cationic compound.

5. The inkjet recording method according to any one of claims 1 to 4, wherein the precoat liquid contains, at least, resin particulate having a polyolefin structure as the resin particulate contained in the precoat liquid.

6. The inkjet recording method according to claim 5, wherein the resin particulate having a polyolefin structure is polypropylene resin particulate.
